# FASCICULE DE BREVET EUROPEEN

(11) **EP 1 217 722 B1**
(45) Date de publication et mention de la délivrance du brevet: **05.05.2010**
(21) Numéro de dépôt: 01128888.3
(22) Date de dépôt: 05.12.2001
(51) Int. Cl.: H02P 8/14

(54) **Procédé et dispositif de pilotage d'un moteur pas à pas triphasé**
Methode und Vorrichtung zur Steuerung eines Drei-Phasen Schrittmotors
Method and device for controlling a three phase stepping motor

(30) Priorité: 19.12.2000 FR 0016567
(43) Date de publication de la demande: 26.06.2002
(73) Titulaire: Valeo Systemes Thermiques, 78320 Le Mesnil-Saint-Denis (FR)
(72) Inventeur: Grendene, Bruno, 78321 La Verriere (FR); Mousley, Arnaud, 78321 La Verriere (FR)
(74) Mandataire: Léveillé, Christophe

(56) Documents cités:
- DE-C- 19 725 743
- US-A- 4 672 282
- US-A- 4 857 817
- US-A- 5 321 340
- US-A- 6 150 788

## Description

La présente invention a pour objet un procédé de pilotage d'un moteur pas à pas triphasé, ainsi qu'un dispositif pour sa mise en oeuvre.

Elle s'applique notamment, quoique non exclusivement, au domaine de l'automobile, et plus particulièrement aux installations de chauffage et/ou climatisation, pour constituer un actionneur qui commande des volets mécaniques de contrôle de flux d'air.

Les moteurs utilisés actuellement sont du type 2/4 bobines et ils sont surdimensionnés, afin de pouvoir dissiper la puissance dans les cas où l'énergie, non contrôlée, est trop élevée (la tension de batterie pouvant varier entre 8 V et 18 V), ce qui a un impact sur le coût de l'actionneur.

Un but de l'invention est de réaliser un pilotage d'un moteur pas à pas triphasé, qui permette en particulier de réduire la taille du moteur de l'actionneur.

Un autre but de l'invention est de réduire le bruit généré par le moteur.

L'invention concerne ainsi un procédé de pilotage d'un moteur pas à pas tri-phasé caractérisé en ce que les pas sont obtenus en portant les bobines du moteur alternativement dans un premier état correspondant à une alimentation en courant d'un premier nombre de bobines et dans un deuxième état correspondant à une alimentation en courant d'un deuxième nombre de bobines et en ce qu'il met en oeuvre une alimentation desdites bobines de sorte qu'elles soient, dans le premier et dans le deuxième état, traversées par des courants générant un couple de valeur sensiblement identique.

Le procédé peut être caractérisé en ce qu'il comporte :
- une estimation du besoin en couple ;
- une modification du rapport cyclique d'un signal d'alimentation du moteur pour faire varier le couple délivré en proportion dudit besoin en couple.

Une estimation du besoin en couple peut être réalisée à des intervalles d'échantillonnage donnés.

Le procédé est avantageusement caractérisé en ce que l'échantillonnage est réalisé avec un décalage temporel par rapport à une commande de pas du moteur, ledit décalage étant choisi pour que la mesure de couple soit effectuée après les pics de commutation du signal.

Selon un mode de réalisation préféré, le procédé est caractérisé en ce que l'estimation du besoin en couple est effectuée en alimentant électriquement une ou deux desdites bobines et en mesurant la tension à une borne d'extrémité d'une bobine non alimentée.

Selon une variante dite bipolaire, le procédé est caractérisé en ce que les bobines sont alimentées à partir de leur borne opposée à la dite borne commune, et en ce que, pour effectuer ladite détection, une première borne est portée à une première tension d'alimentation, une deuxième borne est portée à une deuxième tension d'alimentation, et une troisième borne est couplée à un dispositif de mesure de tension.

Ladite variation de couple peut être obtenue en modifiant le rapport cyclique d'une commande de modulation par largeur d'impulsion ou bien d'un signal de commande du moteur.

Le procédé peut être caractérisé en ce que ledit premier état est une commande bi-phase dans laquelle deux bobines sont parcourues par un courant et en ce que le deuxième état est une commande tri-phase dans laquelle les trois bobines sont parcourues par un courant.

Le procédé peut être caractérisé en ce le premier état est une commande mono-phase dans laquelle une seule bobine est parcourue par un courant et en ce que le deuxième état est une commande bi-phase dans laquelle deux bobines sont parcourues par un courant.

L'invention concerne également un dispositif pour la mise en oeuvre du procédé, caractérisé en ce qu'il comporte :
- un module électronique de commande du moteur en mode étoile, successivement dans un premier et un deuxième état ;
- et pour alimenter les bobines par les courants tels que le moteur produise sensiblement le même couple dans le premier et le deuxième état.

Le dispositif peut être caractérisé en ce que le module électronique de commande présente :
- un sous-module de mesure du besoin en couple ;
- un sous-module modifiant le rapport cyclique d'un signal d'alimentation pour faire varier le couple du moteur en proportion dudit besoin en couple.

D'autres caractéristiques et avantages de l'invention apparaîtront mieux à la lecture de la description ci-après, en liaison avec les dessins, dans lesquels :
La figure 1 représente schématiquement un moteur tri-phase, avec son électronique de pilotage, en mode bipolaire.
La figure 2 symbolise un état des commandes et le passage de courant au travers des 3 bobines de ce moteur (état dit tri-phase).
La figure 3 symbolise un état des commandes et le passage de courant, à travers deux bobines seulement, avec mise en oeuvre d'un niveau de haute impédance pour la troisième bobine (état dit bi-phase).
La figure 4 illustre schématiquement les différents états bi-phase et tri-phase (représentés aux figures 2 et 3) à enchaîner de 1 à 12 pour pouvoir faire tourner le moteur en mode bipolaire.
La figure 5 illustre schématiquement le dispositif du moteur triphasé, avec une autre électronique de pilotage, en mode unipolaire.
La figure 6 illustre schématiquement la forme caractéristique du signal au niveau de la commande de la bobine, lors de la commutation d'un état fixé à un état de haute impédance.
La figure 7 illustre schématiquement l'électronique de pilotage, ainsi que la mesure de besoin en couple.
La figure 8a montre la forme des signaux (avec et sans détection de butée), ainsi que la détection d'un besoin en couple, la figure 8b illustrant une détection de butée en mode régulation avec modulation par largeur d'impulsions PWM.
Les figures 9a et 9b illustrent les valeurs de couple obtenues en fonctionnement bi-phase et tri-phase (mode bipolaire) respectivement avant et après compensation de couple.
Les figures 10 et 11 illustrent deux modes de régulation bipolaire respectivement avec modulation par largeur d'impulsions (PWM) et avec des signaux de commande à rapport cyclique variable.
Les figures 12 à 14 illustrent des pilotages en mode unipolaire :
   - pour la figure 12, la régulation s'effectue avec une modulation en largeur d'impulsions PWM au point milieu (tension U).
   - pour la figure 13, la régulation s'effectue avec un signal modulé par largeur d'impulsions PWM sur les bornes non communes des bobines, le point milieu P étant à la tension U.
   - pour la figure 14, la régulation s'effectue avec un signal de commande à rapport cyclique variable sur les bornes non communes des bobines, le point milieu P étant à la tension +U.

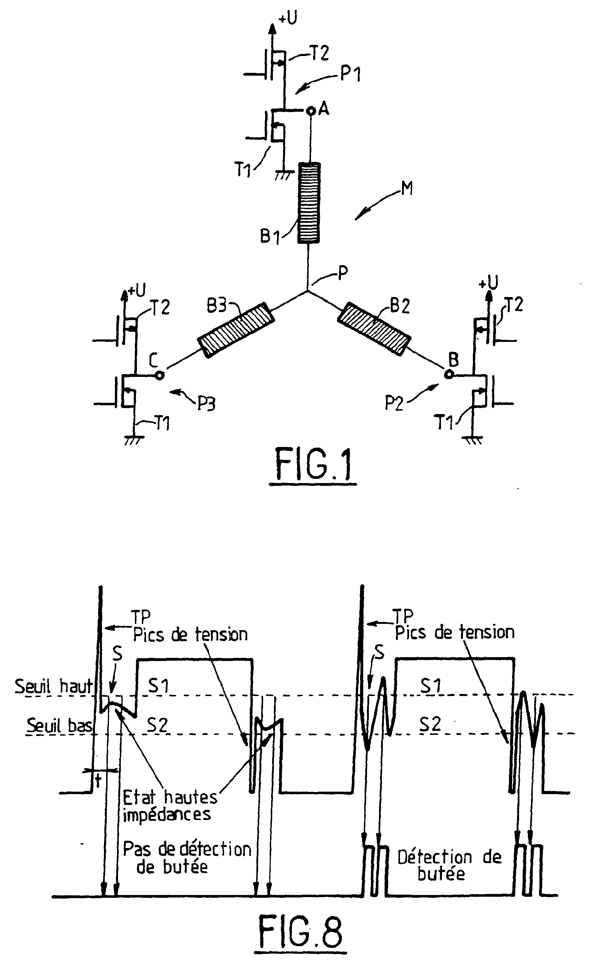

La figure 1 montre un moteur tri-phasé M sur lequel on peut appliquer le procédé. Le moteur est composé de trois bobines B1 à B3 de même impédance, reliées en un point milieu P et disposées en étoile. Le passage de courant à travers ces bobines est réalisé par trois demi-ponts en « H » P1 à P3, composé chacun de deux transistors T1 et T2 : l'un T1 pour une commande à la masse et l'autre T2 pour une commande à la tension d'alimentation U de chacun des demi-ponts P1 à P3.

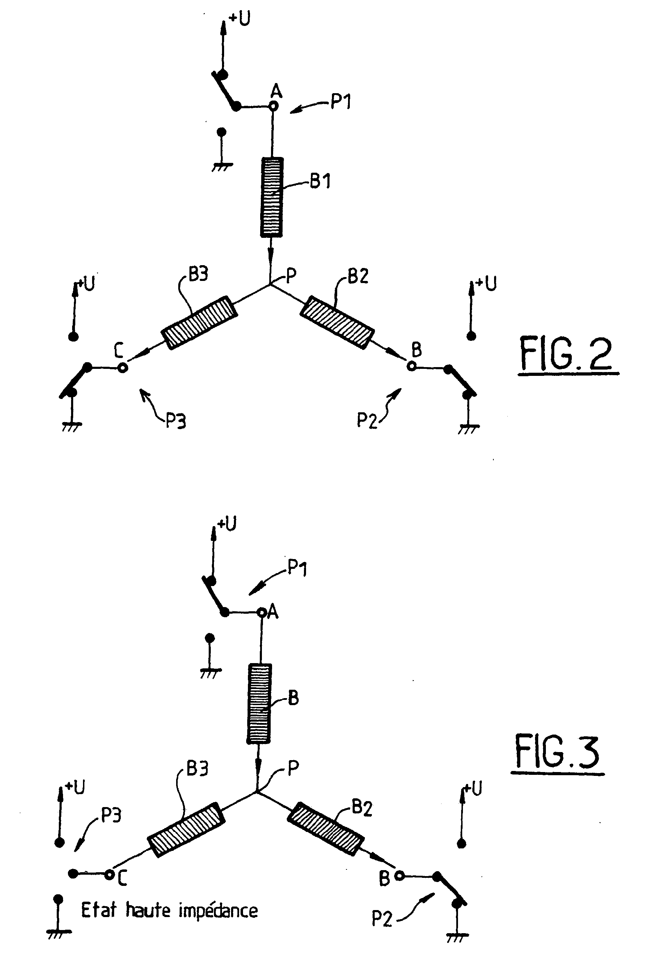

La figure 2 montre l'état des 3 commandes pour faire passer le courant dans les trois bobines B1 à B3 du moteur M représenté dans sa configuration de la figure 1. Deux demi-ponts (par exemple P2 et P3) sont mis à la masse et le troisième (P1 dans ce cas) à la tension d'alimentation U.

La figure 3 représente le même moteur, mais dans un état ou le courant ne passe que dans 2 des 3 bobines. Dans cette configuration, un demi-pont, par exemple P1 est porté à la tension U, un demi-pont, par exemple P2 est mis à la masse, et le troisième, donc P3 est placé en état de haute impédance, et n'est pas traversée par un courant.

Lorsque aucun des transistors T1, T2 d'un demi-pont, ici P3, n'est commandé, la bobine correspondante B3 n'a plus de niveau de tension imposé par sa commande et sa borne C opposée au point milieu P est dans ledit état de haute impédance. La tension présente à cette borne C devient représentative du niveau de tension au point milieu P.

Dans ce cas de figure, appelé haute impédance au niveau de la commande, on peut visualiser, via la bobine qui n'est plus commandée (B3 dans l'exemple ci-dessus) le comportement deux autres bobines (B1, B2) au point milieu P.

C'est à partir de cet état que l'on peut analyser le signal et réaliser une estimation du besoin en couple du moteur M.

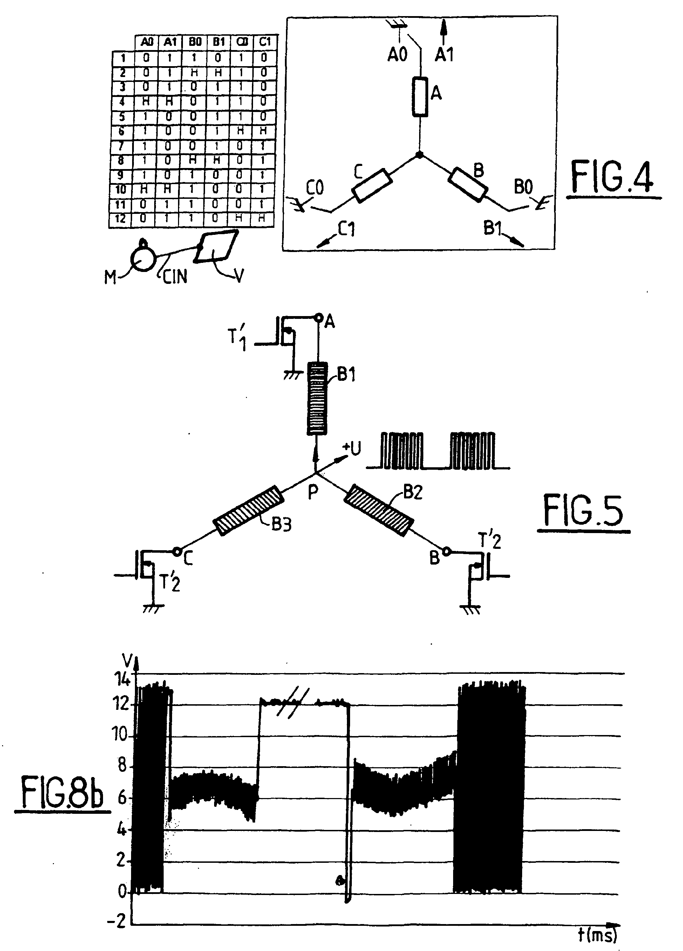

La figure 4 montre dans quels états 1 à 12 doivent être les transistors T1 et T2 des différents demi-ponts pour que le rotor du moteur M se mette à tourner et entraîne par l'intermédiaire d'une cinématique CIN un ou plusieurs, éléments par exemple un volet V. Les différents états portant un nombre impair sont conformes à l'état de la figure 2, (tri-phase, c'est-à-dire trois bobines traversées par un courant), alors que les différents états ayant un nombre pair sont conformes à l'état de la figure 3 (bi-phase, c'est-à-dire deux bobines, ici B1 et B2, traversées par un courant). La lettre H, symbolise un état de haute impédance de la commande d'une bobine, 0 représente une mise à la masse, 1 représente une mise au niveau de la tension d'alimentation.

On peut échantillonner le signal par exemple tous les six pas de commande du moteur M.

Le choix d'une seule bobine (par exemple B3) est suffisant pour faire une détection de couple. Le choix de la bobine réalisé, on analyse par logiciel le signal présent sur la commande de celle-ci, lorsqu'elle est en haute impédance. A cet effet, on couple électriquement la borne C de la bobine B3, sur laquelle est disponible ce signal, à une électronique d'analyse pilotée par un logiciel approprié.

La figure 5 représente une autre façon de piloter le moteur. Cette fois-ci, le point milieu reçoit la tension d'alimentation du moteur. Chacune des bornes A, B, C des bobines B1, B2, B3 est couplée à un transistor respectivement T'1, T'2, T'3. Un état bi-phase de haute impédance est obtenu en portant la borne A, B de deux bobines (par exemple B1 et B2) au potentiel de masse, la borne C de B3 étant alors dans un état de haute impédance. Le moteur M est piloté selon des états monophase et bi-phase alternés selon un cycle de commande. Un cycle de commande peut comporter plusieurs états monophases différents alternant avec plusieurs états bi-phases différents.

Par contre, dans les deux cas, il est possible que la tension d'alimentation se présente sous forme d'un train d'impulsions, par exemple de modulation par largeur d'impulsions (PWM). Il est possible, mais non nécessaire, d'interrompre le train d'impulsions dû à la commutation sur la bobine et générer un état de haute impédance sur la bobine choisie, et réaliser la détection pendant un laps de temps nécessaire à l'échantillonnage de la tension servant à l'estimation. Ce temps d'environ 2 milli-secondes, par exemple toutes les 100 ms pour un moteur commandant un volet, ne perturbe en rien le pilotage, ni les performances du moteur M.

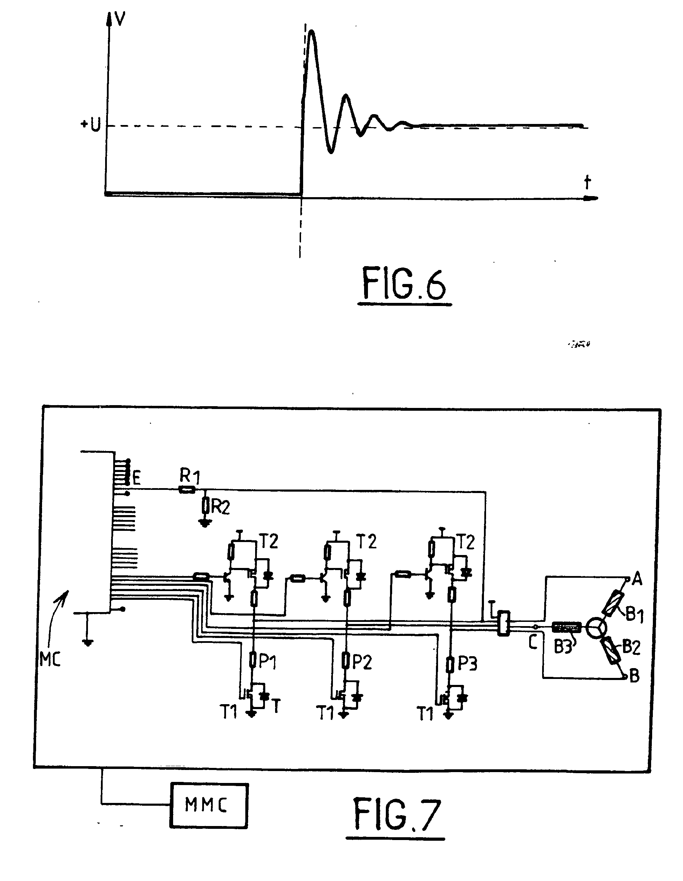

La figure 6 montre la forme de la tension lors d'une commutation vers un état de haute impédance (figure 3 ou figure 6). Une butée n'est jamais parfaite, dans le sens où il ne se produit jamais de choc « mou ». Il se produit un rebond mécanique. Celui-ci est d'autant plus important sur un système de climatisation du fait des lèvres d'étanchéité. Elles constituent un système élastique. Lorsque le volet V arrive en butée, il arrive un moment où le moteur M ne peut plus lutter contre l'effet de ressort dû à cette élasticité de la butée. Le volet est donc renvoyé dans le sens opposé au sens de pilotage, ce qui produit une oscillation au niveau du moteur M. L'énergie mécanique emmagasinée génère une force électro-motrice induite qui produit une tension sinusoïdale. Cette tension sinusoïdale ainsi générée est visible au niveau du signal S de la tension de pilotage (Cf. figure 8a - schéma de droite). En dehors d'une détection de butée (figure 8a - schéma de gauche), la forme du signal S est représentative du besoin en couple du moteur M. Il suffit de mesurer l'amplitude de ce signal S, par exemple à un instant t donné suivant le pic de tension, pour obtenir une valeur proportionnelle au besoin en couple du moteur M. Cette mesure doit s'effectuer en dehors d'une zone de butée. L'amplitude devra alors être comprise entre les seuils S1 et S2, dont le franchissement est caractéristique d'une détection de butée, pour que la mesure de couple soit validée.

Dans le cas d'une modulation par largeur d'impulsions (PWM), le signal S est filtré par la bobine du moteur et il présente par exemple la forme qu'illustre la figure 8b.

La figure 7 représente l'électronique associée à la détection de couple. La bobine B1 a son fil de commande relié à un pont diviseur de tension (R1, R2). Ce pont sert à ramener le niveau du signal à un niveau acceptable pour que l'électronique d'analyse ne soit pas endommagée (sous +5 volts) et ce dans le pire des cas (U = +16 volts). Ce pont est raccordé à une entrée analogique E d'un dispositif de commande, tel qu'un micro-contrôleur local MC, affecté au moteur M et qui est l'élément électronique de traitement du signal issu de ce pont.

En intégrant cette électronique MC directement sur le moteur M et la reliant par bus à un dispositif de pilotage par exemple un microcontrôleur MMC qui supervise l'application, par exemple une installation de chauffage et/ou climatisation, on répond au problème de surcharge de ce dispositif de pilotage.

Le micro-contrôleur de supervision MMC n'envoie que l'ordre de commande de positionnement du moteur M, mais pas tout le séquencement des pas, qui est généré localement par le micro-contrôleur MC.

Dans le cadre de la présente invention, le besoin en couple est mesuré comme indiqué ci-dessus ou bien encore, il est estimé à partir d'informations sur les paramètres influant sur le couple, à savoir, essentiellement la température et la tension d'alimentation.

La compensation de couple réalisée sur chaque phase lors d'un pilotage bi-polaire alternatif bi-phase/triphase, ou bien lors d'un pilotage unipolaire alternatif monophase/bi-phase, permet éventuellement de diminuer le bruit et/ou d'augmenter le couple disponible, dans les limites thermiques du moteur.

Le contrôle du couple s'effectue par modification du rapport cyclique d'une commande de modulation par largeur d'impulsion PWM, ou plus simplement du rapport cyclique d'un signal de pilotage.

Le pilotage bi-phase, tri-phases alternés (soit 2 ou 3 bobines passant du courant) permet d'avoir les meilleures performances au niveau du couple. Sans compensation sur ces phases, on obtient un champ magnétique variant en intensité et donc un couple variant périodiquement au niveau du moteur. Cela engendre du bruit.

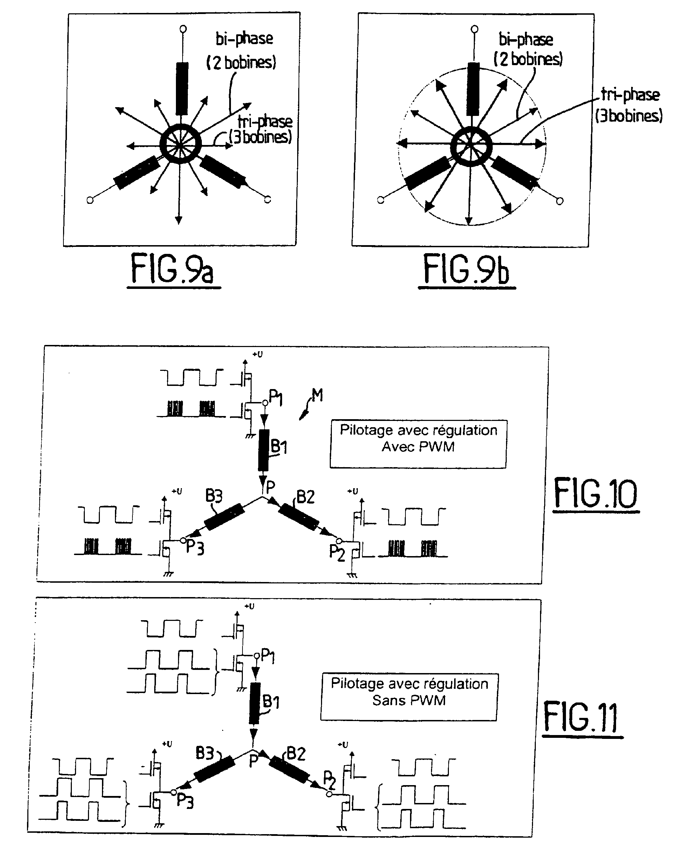

En ramenant un couple constant (Figure 9b), on réduit le bruit tout en augmentant le couple et en restant dans un niveau de puissance raisonnable pour l'actionneur. On peut mesurer le couple dans chacun des premier et deuxième états mis en oeuvre lors d'un cycle et ajuster le courant pour que le couple reste sensiblement constant. Ces valeurs sont ensuite mémorisées pour commander le moteur M.

Pour ce qui concerne le contrôle du couple, le rapport cyclique (du signal "PWM" ou du signal de commande) est proportionnel au couple à fournir. Ceci peut être réalisé de deux manières.

La première, optimale, fixe le rapport cyclique à partir d'une analyse des signaux de pilotage, donnant une image du couple à fournir par le moteur. Cela est fait à partir d'un procédé d'analyse de blocage du moteur, par exemple celui qui a été décrit ci-dessus, en relation avec les figures 8, 9a et 9b.

La seconde contrôle le rapport cyclique avec des informations sur la température ambiante et la tension électrique. Moins chère, cette méthode ne peut détecter un besoin transitoire.

Quant le besoin en couple augmente, on augmente proportionnellement le rapport cyclique. On utilise ainsi au mieux l'énergie disponible. Le moteur n'a plus besoin d'être surdimensionné, puisque la puissance est limitée au strict nécessaire, le moteur chauffe moins, a moins à dissiper d'énergie thermique, consomme moins d'énergie et peut donc être plus petit, et être donc moins cher.

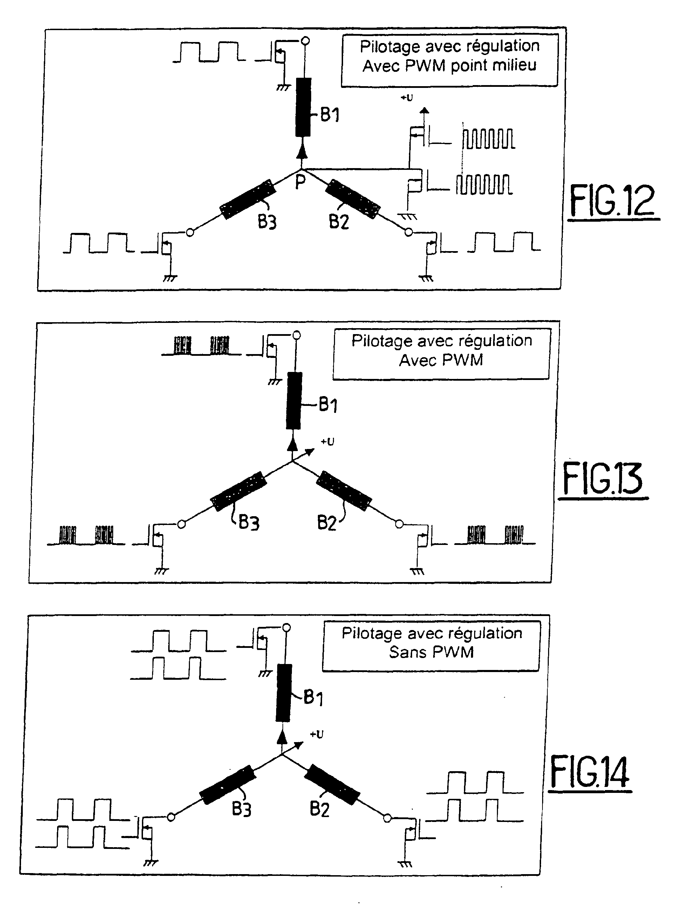

Les figures 10 à 14 illustrent les différentes configurations d'alimentation en mode bipolaire (figures 10 et 11) et unipolaire (figures 12 à 14), selon que l'on utilise (figures 10, 11 et 13) ou non (figures 11 et 14) une régulation par modulation de largeur d'impulsion (PWM). La figure 12 combine alimentation des extrémités des bobines par des signaux de commande à rapport cyclique variable, et une régulation au point milieu P par une commande à modulation de largeur d'impulsion (PWM).

## Revendications

1. Procédé de pilotage d'un moteur pas à pas tri-phasé dans lequel les pas sont obtenus en portant les bobines (B1, B2, B3) du moteur (M) successivement dans un premier état correspondant à une alimentation en courant d'un premier nombre de bobines et dans un deuxième état correspondant à une alimentation en courant d'un deuxième nombre de bobines et en ce qu'il met en oeuvre une alimentation desdites bobines de sorte qu'elles soient dans le premier et dans le deuxième état, traversées par des courants générant un couple de valeur sensiblement identique, **caractérisé en ce qu'**il comporte :
- une estimation du besoin en couple ;
- une modification du rapport cyclique d'un signal d'alimentation du moteur pour faire varier le couple délivré en proportion dudit besoin en couple.

2. Procédé selon la revendication 1, **caractérisé en ce que** ladite estimation du besoin en couple est réalisée à des intervalles d'échantillonnage donnés.

3. Procédé selon la revendication 2, **caractérisé en ce que** l'échantillonnage est réalisé avec un décalage temporel par rapport à une commande de pas du moteur, ledit décalage étant choisi pour que la mesure de couple soit effectuée après les pics de commutation (TP) du signal.

4. Procédé selon une des revendications 1 à 3, **caractérisé en ce que** l'estimation du besoin en couple est effectuée en alimentant électriquement une ou deux desdites bobines (B1, B2) et en mesurant la tension à une borne d'extrémité d'une bobine (B3) non alimentée.

5. Procédé selon une des revendications précédentes, **caractérisé en ce que** les bobines (B1, B2, B3) sont alimentées à partir de leur borne (A, B, C) opposée à la dite borne commune (P), et **en ce que**, pour effectuer ladite estimation, une première borne (A) est portée à une première tension d'alimentation, une deuxième borne (B) est portée à une deuxième tension d'alimentation, et une troisième borne (C) est couplée à un dispositif de mesure de tension.

6. Procédé selon une des revendications précédentes, **caractérisé en ce que** ladite variation du couple est réalisée en modifiant le rapport cylindrique d'une commande de modulation par largeur d'impulsion.

7. Procédé selon une des revendications précédentes, **caractérisé en ce que** ledit premier état est une commande bi-phase dans laquelle deux bobines sont parcourues par un courant et **en ce que** le deuxième état est une commande tri-phase dans laquelle les trois bobines sont parcourues par un courant.

8. Procédé selon une des revendications 1 à 6, **caractérisé en ce que** le premier état est une commande mono-phase dans Laquelle une seule bobine est parcourue par un courant et **en ce que** le deuxième état est une commande bi-phase dans laquelle deux bobines sont parcourues par un courant.

9. Dispositif pour la mise en oeuvre de procédé selon une des revendications précédentes, **caractérisé en ce qu'**il comporte un module électronique de commande (MMC) du moteur (M) en mode étoile, successivement dans un premier et un deuxième état avec des courants de valeur telles que le moteur produise sensiblement le même couple dans le premier et le deuxième état.

10. Dispositif selon la revendication 9, **caractérisé en ce que** le module électronique de commande (MMC) présente :
- un sous-module de mesure du besoin en couple ;
- un sous-module modifiant le rapport cyclique d'un signal d'alimentation pour faire varier le couple du moteur en proportion dudit besoin en couple.

## Claims

1. Method for controlling a three-phase stepping motor in which the steps are obtained by taking the coils (B1, B2, B3) of the motor (M) successively into a first state corresponding to supplying with current a first number of coils and into a second state corresponding to supplying with current a second number of coils and wherein it uses supplying of the said coils so that they are in the first and in the second state, traversed by currents generating a torque of substantially identical value, **characterized in that** it comprises:
- an estimate of the torque requirement;
- a modification of the cyclic ratio of a supply signal of the motor in order to vary the delivered torque in proportion to the said torque requirement.

2. Method according to Claim 1, **characterized in that** the said estimate of the torque requirement is made at given sampling intervals.

3. Method according to Claim 2, **characterized in that** the sampling is carried out with a time shift relative to a step command of the motor, the said shift being chosen so that the torque measurement is taken after the switching peaks (TP) of the signal.

4. Method according to one of Claims 1 to 3, **characterized in that** the estimate of the torque requirement is made by electrically supplying one or two of the said coils (B1, B2) and by measuring the voltage at an end terminal of an unsupplied coil (B3).

5. Method according to one of the preceding claims, **characterized in that** the coils (B1, B2, B3) are supplied from their terminal (A, B, C) opposite to the said common terminal (P), and **in that**, in order to make the said estimate, a first terminal (A) is taken to a first supply voltage, a second terminal (B) is taken to a second supply voltage and a third terminal (C) is coupled to a voltage-measurement device.

6. Method according to one of the preceding claims, **characterized in that** the said torque variation is carried out by modifying the cyclic ratio of a pulse width modulation control.

7. Method according to one of the preceding claims, **characterized in that** the said first state is a two-phase control in which two coils are traversed by a current and **in that** the second state is a three-phase control in which the three coils are traversed by a current.

8. Method according to one of Claims 1 to 6, **characterized in that** the first state is a single-phase control in which a single coil is traversed by a current and **in that** the second state is a two-phase control in which two coils are traversed by a current.

9. Device for applying the method according to one of the preceding claims, **characterized in that** it comprises an electronic module (MMC) for controlling the motor (M) in star mode, successively into a first and a second state with currents of value such that the motor produces substantially the same torque in the first and the second state.

10. Device according to Claim 9, **characterized in that** the electronic control module (MMC) has:
- a sub-module for measuring the torque requirement;
- a sub-module modifying the cyclic ratio of a supply signal in order to vary the torque of the motor in proportion to the said torque requirement.

## Patentansprüche

1. Verfahren zur Steuerung eines Dreiphasen-Schrittmotors, bei dem die Schritte erhalten werden, indem die Spulen (B1, B2, B3) des Motors (M) nacheinander in einen ersten Zustand, der einer Stromversorgung einer ersten Anzahl von Spulen entspricht, und in einem zweiten Zustand gebracht werden, der einer Stromversorgung einer zweiten Anzahl von Spulen entspricht, und bei dem eine derartige Versorgung der Spulen durchgeführt wird, dass sie im ersten und im zweiten Zustand von Strömen durchflossen werden, die ein Drehmoment von im Wesentlichen gleichem Wert erzeugen, **dadurch gekennzeichnet, dass** es aufweist:
- eine Schätzung des Drehmomentbedarfs;
- eine Änderung des Abtastverhältnisses eines Versorgungssignals des Motors, um das gelieferte Drehmoment im Verhältnis zum Drehmomentbedarf zu ändern.

2. Verfahren nach Anspruch 1, **dadurch gekennzeichnet, dass** die Schätzung des Drehmomentbedarfs in gegebenen Tastabständen durchgeführt wird.

3. Verfahren nach Anspruch 2, **dadurch gekennzeichnet, dass** die Abtastung mit einer zeitlichen Verzögerung bezüglich einer Schrittsteuerung des Motors durchgeführt wird, wobei die Verzögerung so gewählt wird, dass die Drehmomentmessung nach den Schaltspitzen (TP) des Signals durchgeführt wird.

4. Verfahren nach einem der Ansprüche 1 bis 3, **dadurch gekennzeichnet, dass** die Schätzung des Drehmomentbedarfs durchgeführt wird, indem eine oder zwei der Spulen (B1, B2) mit Strom versorgt werden, und indem die Spannung an einer Endklemme einer nicht versorgten Spule (B3) gemessen wird.

5. Verfahren nach einem der vorhergehenden Ansprüche, **dadurch gekennzeichnet, dass** die Spulen (B1, B2, B3) ausgehend von ihrer Klemme (A, B, C) entgegengesetzt zur gemeinsamen Klemme (P) versorgt werden, und dass zur Durchführung der Schätzung eine erste Klemme (A) auf eine erste Versorgungsspannung gebracht wird, eine zweite Klemme (B) auf eine zweite Versorgungsspannung gebracht wird, und eine dritte Klemme (C) mit einer Spannungsmessvorrichtung gekoppelt wird.

6. Verfahren nach einem der vorhergehenden Ansprüche, **dadurch gekennzeichnet, dass** die Drehmomentänderung durchgeführt wird, indem das Abtastverhältnis einer Impulsbreitenmodulationssteuerung verändert wird.

7. Verfahren nach einem der vorhergehenden Ansprüche, **dadurch gekennzeichnet, dass** der erste Zustand eine Zweiphasensteuerung ist, bei der zwei Spulen von einem Strom durchflossen werden, und dass der zweite Zustand eine Dreiphasensteuerung ist, bei der die drei Spulen von einem Strom durchflossen werden.

8. Verfahren nach einem der Ansprüche 1 bis 6, **dadurch gekennzeichnet, dass** der erste Zustand eine Einphasensteuerung ist, bei der eine einzige Spule von einem Strom durchflossen wird, und dass der zweite Zustand eine Zweiphasensteuerung ist, bei der zwei Spulen von einem Strom durchflossen werden.

9. Vorrichtung zur Durchführung des Verfahrens nach einem der vorhergehenden Ansprüche, **dadurch gekennzeichnet, dass** sie ein elektronisches Modul (MMC) zur Steuerung des Motors (M) im Stern-Modus nacheinander in einem ersten und einem zweiten Zustand mit Strömen solcher Werte aufweist, dass der Motor im ersten und im zweiten Zustand im Wesentlichen das gleiche Drehmoment erzeugt.

10. Vorrichtung nach Anspruch 9, **dadurch gekennzeichnet, dass** das elektronische Steuermodul (MMC) aufweist:
- ein Submodul zur Messung des Drehmomentbedarfs,
- ein Submodul, das das Abtastverhältnis eines Versorgungssignals verändert, um das Drehmoment des Motors im Verhältnis zum Drehmomentbedarf zu ändern.
